# EUROPEAN PATENT APPLICATION

(11) **EP 4 442 495 A1**
(43) Date of publication of application: **09.10.2024**
(21) Application number: 23166576.1
(22) Date of filing: 04.04.2023
(51) Int. Cl.: B60L 58/12, B60L 1/00, B60L 3/12, B60L 15/20

(54) **METHOD FOR SELECTING AT LEAST ONE FUNCTION OF A VEHICLE TO BE DECTIVATED FOR SAVING ENERGY**

(71) Applicant: CARIAD SE, 38440 Wolfsburg (DE)
(72) Inventor: MARIMUTHU, Prasanna, 44793 Bochum (DE); THEIMER, Wolfgang, 44879 Bochum (DE)
(74) Representative: Hofstetter, Schurack & Partner

(57) **Abstract**

The invention relates to a method for selecting a function (10) of a vehicle (1) to be deactivated for saving energy provided by a battery (2). The method comprises: identifying (S1) all functions (10) that are currently active in the vehicle (1); for each identified function (10), determining (S2) a remaining time information (11) describing a time interval for which the function (10) continues to be operable in such a way that a predefined range and/or destination of the vehicle (1) is reachable; for each identified function (10), verifying (S3) if the function (10) is part of a group (16) of predefined functions (10) that are required to remain activated; for each identified function (10) which is not part of the group (16), providing (S5) a deactivation option (17) that indicates the remaining time information (11), wherein by activating the provided deactivation option (17) the function (10) is deactivated (S8).

## Description

The invention relates to a method for selecting at least one function of a vehicle to be deactivated for saving energy provided by a battery of the vehicle. The invention furthermore relates to a vehicle configured to perform such a method.

A vehicle may provide at least one function that may be activated or deactivated while the vehicle is driving. Such a function may be, for example, a safety relevant function, a comfort function, a vehicle performance function and/or an advanced driver assistance system. Each activated function requires energy that is provided by a battery of the vehicle in case of an electric vehicle. In case of a hybrid vehicle, the battery may as well provide the energy required to operate the activated function. The respective activated function is hence powered by the battery of the vehicle. However, this battery may as well provide energy for a driving system of the vehicle. Therefore, each activated function influences a remaining time during which the vehicle is still operable by energy provided by the battery.

Furthermore, the vehicle may comprise a high range sensor, actuators as well as an efficient battery handling system. In an event of a low energy level of the battery, the battery handling system may blindly limit or even deactivate individual functions of the vehicle which it considers less important than, for example, the driving system and/or other activated functions of the vehicle. However, such an automatic deactivation may be undesired by a user of the vehicle. There is hence a need for a more personalized way to select at least one function of a vehicle that is to be disabled for saving energy provided by the battery of the vehicle.

DE 10 2009 039 373 A1 discloses an energy assistant for use in electric vehicles. The energy assistant automatically deactivates electrical consumers to influence a driving range of the vehicle.

DE 10 2020 130 858 A1 discloses a method for operating a vehicle with at least one energy storage. If energy stored in the energy storage is below a specific value, at least one comfort function of the vehicle is reduced.

DE 10 2019 204 959 A1 discloses an energy management module for an electric vehicle. The energy management module detects electrical energy stored in a battery of the vehicle and records an energy requirement of the electric vehicle to reach a destination specified by a driver. The energy requirement depends on operating parameters of the electric vehicle.

It is the object of the invention to provide a personalized way to select at least one function of a vehicle that is to be disabled for saving energy provided by a battery of the vehicle.

The independent claims solve the object.

A first aspect of the invention relates to a method for selecting at least one function of a vehicle to be deactivated or disabled for saving energy provided by a battery of the vehicle. The vehicle in the sense of the invention is an electric vehicle and/or a hybrid vehicle. The battery is a high-voltage battery. The battery is configured to provide energy for a drive system of the vehicle. The at least one function of the vehicle may comprise a software and/or a hardware component. As an example, the function may be an activated voice control, a day time activation of front and/or rear lights of the vehicle and/or an automatic distance control. Alternative or additional functions are possible. The function may alternatively be referred to as a vehicle function of the vehicle.

The method comprises identifying all functions of the vehicle that are currently active in the vehicle and are at least partially powered by the battery. Typically, the respective function is fully powered by the battery. This means that all active functions of the vehicle are detected and, for example, added to a list of active functions of the vehicle. Currently in the sense of the invention means at a current point of time or moment when the method is performed.

For each identified function, the method comprises determining a remaining time information. The remaining time information describes a time interval starting at a current moment. For this time interval, the function continues to be operable in such a way that a predefined range and/or destination of the vehicle is reachable despite this continued operation of the function as well as the continued operation of the other identified functions. The remaining time information is determined by applying a time information determination algorithm on vehicle data describing an energy consumption of the identified functions and/or a movement of the vehicle. This means that for every identified function and hence for every active function in the vehicle, a time value is calculated. This time value describes for how long this function can remain activated before it, for example, has to be shut down. It is hereby assumed that there is either a predefined range for the vehicle and/or a predetermined destination of the vehicle. The predetermined destination is, for example, provided by a user. The predetermined destination may be a driving destination of a navigation system of the vehicle. The predefined range is, for example, a minimum range the vehicle has to reach. The predefined range is hence a set value for the vehicle. For each identified function, the remaining time information is calculated under the assumption that all other identified functions remain activated. It hence only describes the time interval during which the battery may continue to power this function whereby the predefined range and/or destination is still reachable without recharging the battery.

The time information determination algorithm comprises, for example, at least one rule which is applied on the vehicle data to calculate the remaining time information for each identified function. The vehicle data is typically provided to a control unit of the vehicle that performs the inventive method. The vehicle data may be captured and/or determined by components of the vehicle. The vehicle data may be sensor data captured by a sensor of the vehicle. The vehicle data may comprise energy consumption data for all functions of the vehicle. The energy consumption data may be stored in a storage unit of the control unit. The vehicle data that describe the movement of the vehicle may describe a speed, an acceleration and/or a driving environment of the vehicle. The vehicle data may furthermore describe a current and/or planed driving maneuver of the vehicle.

For each identified function, the method comprises verifying if the function is part of a group of predefined functions that are required to remain activated for the vehicle to continue its operation. For example, the group may comprise a function that is necessary for safe driving of the vehicle. The group of predefined functions may be listed in a function list that is stored in the control unit of the vehicle. The determined list of all active functions in the vehicle is, for example, compared to this function list. If an identified function is part of the group of predefined functions, the method may comprise no further steps regarding this function. In this case, this function is disabled from deactivation.

The method comprises that for each identified function which is not part of the group, a deactivation option is provided. The provided deactivation option indicates the remaining time information determined for the function. Providing the deactivation option comprises, for example, displaying the function and the remaining time information on a display device in the vehicle. By manually selecting the displayed deactivation option, the function may be deactivated. This means that by activating the provided deactivation option, the function is deactivated. It is hence possible to select at least one function that is currently active in the vehicle and to decide to disable this function to save energy provided by the battery of the vehicle. Thus, the method describes how to operate, for example, a battery management system of the vehicle to save energy.

By deactivating the function, the remaining time for another function of the vehicle may be increased. Besides, the predetermined range may be extended when deactivating at least one of the active functions of the vehicle. However, by indicating the remaining time information for each deactivation option, the user is well informed about the impact of deactivating the respective function. The method hence offers a transparent and user friendly way to select functions to be deactivated in a vehicle. Thus, the method provides a personalized way to select at least one function of a vehicle that is to be disabled for saving energy provided by the battery of the vehicle.

In particular, the data describing the energy consumption of the respective identified function are based on an energy requirement for both the software required for this function and the hardware required for the function. This is due to the observation that a typical function in a vehicle requires not just a software but also hardware components such as switches, sensors, actuators and/or controllers. Each one of these hardware components has to be catered with the same source of power at a different rate depending on the function. Thus, it is essential to understand the power needs not for individual hardware components but for the entire function. The method enables the vehicle to segregate power needs and categories of functions, for example, safety, comfort, performance and advanced driver assistance systems. Based on this information, power needs may be prioritized with the help of user relevance. The different categories of functions are considered by verifying if the function is part of the group of predefined functions. It is then the goal to enable the user to plan his or her own power saving sequence so that the driving experience is not compromised by the power limitation of the battery. Based on the information of the hardware requirements used for a particular period of time, the power usage of the complete function is predicted. With the remaining power supply which the battery can cater the user can prioritize the functions he or she is interested in. This is done by providing the deactivation option that can be selected, for example, manually by the user.

An embodiment comprises that each identified function which is not part of the group is automatically deactivated when the time interval expires regardless of whether the deactivation option for this function has been activated or not. It is hence a consequence of the vehicle that always tries to reach the predefined range and/or the destination to automatically deactivate active functions when necessary in order to guarantee reaching the predefined range and/or destination. This is, however, only the case for functions that are not part of the group and which hence do not need to be activated for the vehicle to continue its operation. The remaining time information hence describes an actual residual time because when the time interval according to the remaining time information is over, the automatic deactivation of the respective function is inevitable. This makes particularly clear, why the remaining time information is a useful information to help the user select functions for deactivation.

Another embodiment comprises that the provided deactivation option is outputted by an output device in the vehicle. The output device is in particular a display device such as a head-up display. Alternatively or additionally, the display device may be located in a center console of the vehicle. Alternatively or additionally, the output device comprises a loudspeaker. In order to, for example, manually activate one or multiple deactivation options, all provided deactivation options are presented to the user. The display device and/or loudspeaker may alternatively or additionally be a component of a mobile device that is positioned in the vehicle. Such a mobile device may be a smartphone and/or a tablet. By outputting the provided deactivation option, the user is informed about the deactivation options and has the possibility to manually activate the desired deactivation option or options.

Besides, an embodiment comprises that all the provided deactivation options are output in an order dependent on the determined time information. It is, for example, possible to output the deactivation options in a list that starts, for example, with the function that in case of deactivation allows the highest energy saving. Alternatively, the listing may be in inverse direction, for example, starting with the function that is to be deactivated in the shortest amount of time and has hence the shortest remaining time information. Alternatively or additionally, the provided deactivation options are output in an order dependent on a relevance of the respective function for driving. A function relating to a performance of the vehicle may then be lower in the list than a comfort function or vice versa. In general, the order in which the provided deactivation options are outputted is versatile. The order may, in particular, depend on user preferences and hence respective user settings.

Another embodiment comprises that at least one of the output deactivation options is manually selectable by a selection device. Once it is selected by the selection device, the output deactivation option is added to a list of selected deactivation options. The list is able to comprise several selected deactivation options. At least one of the selected deactivation options is removable from the list. Each selected deactivation option on the list is manually activatable. In other words, it is possible for the user to create a list of multiple functions he or she would like to have deactivated to save energy. However, the deactivation option selected and added to the list has then to be activated, for example, by pressing an activation button before the respective function is actually deactivated. This results in high transparence for the user.

It also means that a deactivation option that has been selected and hence added to the list does not have to remain on the list but can be removed from it by, for example, selecting it for removal from the list. This allows an additional step between selecting an deactivation option and activating the deactivation of the function that is proposed for deactivation by the deactivation option. The selection device is, for example, a button, a knob, a turn-push-switch, and/or an element on a touchscreen. Alternatively or additionally, the selection device may be operated by voice control.

According to a further embodiment, at least one of the provided deactivation options is activated automatically. The automatic activation is performed under consideration of at least one setting in a user profile of a current user of the vehicle. The user that has provided the setting is also the current user of the vehicle. The current user is preferably a driver of the vehicle. This means that, for example, a not personalized setting and/or a setting that corresponds to another user may not influence the automatic activation. The at least one setting may be stored in the user profile. The user profile may be stored in the vehicle, in particular in the storage unit of the control unit. Alternatively or additionally, it may be stored in an external device, such as a backend, a cloud server and/or a server. In this case, the vehicle may request the at least one setting from the externally stored user profile to be transmitted to the vehicle via, for example, vehicle-to-infrastructure communication. To receive the at least one setting, the vehicle may comprise a connection interface.

Alternatively or additionally, the automatic activation of the deactivation option is performed under consideration of at least one stored experience information. The stored experience information describes a previous behavior of the current user when manually selecting at least one of the provided deactivation options. If, for example, in the past the user deactivated the voice control, in particular multiple times, it is possible to automatically deactivate the voice control. It is hence possible to have a training phase during which the vehicle learns which functions are typically deactivated by the user. Based on such historical data and hence experience information, the method may be automated. It is hence possible to avoid a manual activation of the deactivation option.

In general, an information in the sense of the invention may comprise data. Instead of, for example, the stored experience information it may be referred to stored experience data. This applies analogously for other information mentioned. In particular, the remaining time information may be remaining time data.

A further embodiment comprises that the group of predefined functions that are required to remain activated for the vehicle to continue its operation comprises safety relevant functions of the vehicle. That means that every function that has been marked as a safety relevant function is added to the group of predefined functions that is not offered for deactivation. These functions hence always remain activated even if their operation may result in not reaching the predefined range and/or destination of the vehicle.

Besides, another embodiment comprises that the group of predefined functions that are required to remain activated for the vehicle to continue its operation does not comprise comfort functions, vehicle performance functions and/or advanced driver assistance systems. Every function of the vehicle that serves comfort, such as the voice control but also functions for operating an air-conditioning and/or multimedia system of a vehicle are possible options for deactivation. The vehicle performance function may be a sport mode or dynamic driving mode. The advanced driver assistance systems are, for example, a lane assist, a park assist or any other driver assistance system. Such systems can be replaced by manual operations in case of a deactivation and are hence not considered relevant enough to be part of the group of predefined functions. There are hence a lot of possibilities for functions that are available for deactivation.

A further embodiment comprises that a battery management system of the battery provides the vehicle data describing the energy consumption of the identified functions. This means that the method may rely on information provided by the battery management system which is, for example, a software provided to operate the battery. The battery management system may be a part of a control unit of the battery. However, it may alternatively be an individual component or may even be part of a central control unit of the vehicle. The battery management system is aware of the power usage of the entire system of the vehicle and in particular of its individual functions. It can hence provide the vehicle data describing the energy consumption to another component of the vehicle that requests this information. This other component is here, for example, a function manager which is a software component in the control unit of the vehicle. The function manager performs the method and is hence the software that performs the method. It is thus reasonable how the method comprises the calculation the remaining time information.

The processing parts of the method are performed by the control unit and hence by the function manger. Based on the rules set by the function manger, any function that is not part of the group can be enabled or disabled. The function manger has access to, for example, a vehicle internal communication connection by which control signals may be sent to the control unit that performs the method and which is in exchange with the battery management system. The inputs for the control unit are here the power capacity from the battery management system as well as user feedback from the output device.

For use cases or use situations which may arise in the method and which are not explicitly described here, it may be provided that, in accordance with the method, an error message and/or a prompt for user feedback is output and/or a default settings and/or a predetermined initial state is set.

Another aspect of the invention relates to a vehicle which is configured to perform the described method. The vehicle is preferably motor vehicle, in particular a passenger car, truck, passenger bus and/or motorcycle.

The invention also includes further embodiments of the vehicle according to the invention which have features as already described in connection with the further embodiments of the method according to the invention.

The invention also comprises the control unit of the vehicle. The control unit may have a data processing device or a processor device which is set up to carry out the computer implemented steps of the inventive method. For this purpose, the processor device may comprise at least one microprocessor and/or at least one microcontroller and/or at least one FPGA (Field Programmable Gate Array) and/or at least one DSP (Digital Signal Processor). Furthermore, the processor device may comprise program code which is arranged to perform the embodiment of the method according to the invention when executed by the processor device. The program code may be stored in a data memory of the processor device. The processor device may be based, for example, on at least one circuit board and/or on at least one SoC (system on chip).

As a further solution, the invention also comprises a computer-readable storage medium comprising program code which, when executed by a computer or computer network, such as the control unit, causes the computer or computer network to execute an embodiment of the inventive method. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called appstore server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also comprises combinations of the features of the described embodiments. Thus, the invention also comprises realizations each comprising a combination of the features of more than one of the described embodiments, provided that the embodiments have not been described as mutually exclusive.

In the following an exemplary implementation of the invention is described. The figures show:
- Fig. 1: a schematic representation of a vehicle with a battery and a control unit; and
- Fig. 2: a schematic representation of a method for selecting at least one function of a vehicle to be disabled for saving energy provided by a battery of the vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination.

Furthermore, the described embodiment can also be supplemented by further features of the invention already described.

In the figures identical reference signs indicate elements that provide the same function.

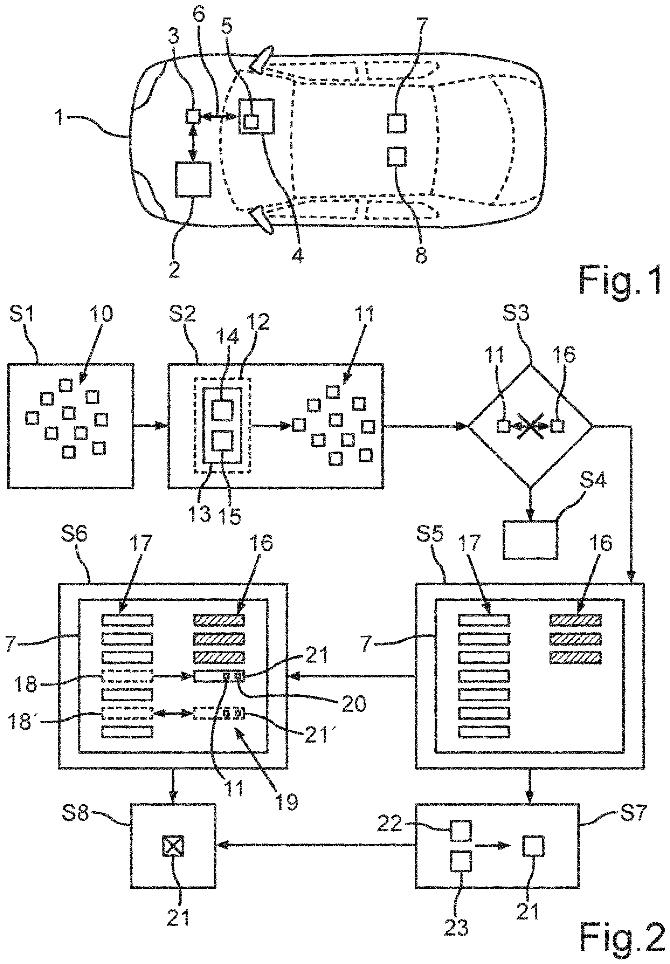

Fig. 1 shows a vehicle 1. The vehicle 1 comprises a battery 2 which is a high voltage battery. The battery 2 provides energy for a driving system of the vehicle 1. The vehicle 1 is hence an electric and/or hybrid vehicle 1.

The battery 2 may comprise a battery management system 3. The battery management system 3 is, for example, a software configured to manage the battery 2 and its energy output. The battery management system 3 may be integrated into the battery 2. The vehicle 1 comprises a control unit 4. The control unit 4 is, for example, an electronic control unit of the vehicle 1. The control unit 4 may comprise a function manager 5 which is a software component of a software that is executed by the control unit 4. The battery management system 3 may provide data for the control unit 4. Therefore, there may be a vehicle internal connection 6 between the battery management system 3 and the control unit 4.

The vehicle 1 may comprise an output device 7. The output device 7 is preferably a display device in the vehicle 1. Alternatively or additionally, the output device 7 is, for example, at least one loudspeaker in the vehicle 1. The vehicle 1 may as well comprise a selection device 8. The selection device 8 is, for example, a button, a knob and/or a touchscreen in the vehicle 1 and/or is operable by voice commands captured by a microphone in the vehicle 1.

Fig. 2 shows steps of a method for selecting at least one function 10 of the vehicle 1 to be disabled for saving energy provided by the battery 2 of the vehicle 1. In a step S1, the method comprises identifying all functions 10 of the vehicle 1 that are currently active in the vehicle 1. These functions are all at least partially powered by the battery 2. The functions that are activated or active in the vehicle 1 are, for example, a daytime running light, a sunroof control, a multimedia online streaming, a charging port (wired or wireless), an automatic climate control, a voice control, an automated cruise control, an automatic headlight switching, an automatic distance control and/or a traffic sign recognition. Alternative or additional functions 10 are possible.

In a step S2, for each of the identified functions 10, a remaining time information 11 is determined. In case of, for example, the ten previously named possible functions 10, ten remaining time information 11 are determined. Each remaining time information 11 describes a time interval starting at a current moment. For this time interval the function 10 continues to be operable in such a way that a predefined range and/or destination of the vehicle 1 is reachable despite this continued operation of the function 10 as well as the continued operation of the other identified functions 10. To determine the remaining time information 11, a time information determination algorithm 12 is applied on vehicle data 13. The vehicle data is provided to perform step S2. The vehicle data 13 describe an energy consumption 14 of the identified functions 10 and/or a movement 15 of the vehicle 1. Typically, the battery management system 3 provides the vehicle data 13 describing the energy consumption 14 of the identified functions 10. Therefore, it provides, for example, energy consumption data for each individual function 10 or may do so upon request.

In general, the method is performed by the control unit 4 and more precisely by the function manager 5. However, at least part of the vehicle data 13 necessary to perform the method may be provided by the battery management system 3 and is hence transmitted to the control unit 4.

For each identified function 10 it is verified, if the function 10 is part of a group 16 of predefined functions 10 that are required to remain activated for the vehicle 1 to continue its operation. This verification is performed in a step S3. Every function that is part of that group 16 is disabled from being deactivated. Therefore in a step S4, for each identified function that is part of the group 16 nothing further happens besides that this function 10 is disabled from any further deactivation and hence remains activated. However, for each identified function 10, which is not part of the group 16, a step S5 is performed. Step S5 comprises providing a deactivation option 17. The provided deactivation option 17 indicates the remaining time information 11 determined for the function 10. Upon activating the provided deactivation option 17 the function 10 is deactivated. The activation of the provided deactivation option 17 can be performed manually or automatically. It is important to note that for each identified function 10 which is not part of the group 16, an automated deactivation takes place when the time interval determined or described by the remaining time information 11 expires regardless whether the function 10 has been activated for deactivation or not.

Preferably, the provided deactivation option 17 is output by the output device 7 in the vehicle 1. Such an output is exemplary sketched in step S5. Here on the left side, there is a listing of all the provided deactivation options 17. On the right side in this example, three functions 10 are listed that are part of the group 16. In the above-mentioned example these are here the automatic cruise control, the automatic headlight switching and the automatic distance control. All the other exemplarily named functions 10 are considered not part of the group 16. Preferably, the group 16 comprises safety relevant functions 10 of the vehicle 1. However, it does not comprises comfort functions 10, vehicle performance functions 10, and/or driver assistance systems. Therefore, for example, the traffic sign recognition or the voice control or any of the other functions 10 are possible candidates for the deactivation.

In case of manual performance of the method, a step S6 may take place after step S5. In step S6, a user may manually select at least one of the output deactivation options 17 by means of the selection device 8 in the vehicle 1. The selected deactivation option 17 is added to a list 19 of selected deactivation options 17. The list 19 may comprise several selected deactivation options 17. Here, an example is sketched in which the user selects one of the deactivation options 17 which is here the selected deactivation option 18. The output of this deactivation option 17 then disappears from the left side and hence from the part of the display where all the provided deactivation options 17 are listed. The selected deactivation option 18 is then displayed on the right side comprising at least the remaining time information 11 as well as an activation button 20. Here, a second selected deactivation option 18' has been selected by the user manually as well, so that this deactivation option 17 is now also listed on the right side below the activated functions 10 that belong to the group 16. The list 19 may comprise several selected deactivation options 18, 18'. At least one of the selected deactivation options 18, 18' is removable from the list 19. It is hence possible to create a list 19 with varying listed deactivation options 17 before at least one these is activated by manually operating the activation button 20. When, the activation button 20 is, for example, pressed, the respective deactivation option 17 is the activated deactivation option 21, 21'.

Alternatively or additionally, in a step S7 the activation of the deactivation option 17 may be automatic. Therefore, the method considers at least one setting 22 in a user profile of the current user of the vehicle 1 and/or at least one stored experience information 23 describing a previous behavior of the current user when manually selecting at least one of the provided deactivation options 17.

Afterwards, the respective activated deactivation option 20, 21' results in deactivation of the respective function 10 in a step S8. Upon activating the provided and/or selected deactivation option 17, the function 10 is deactivated. In this example, it is, for example, possible to have the traffic sign recognition as a selected deactivation option 18, with the remaining time for this function 10 of 29 minutes. However, other functions 10 may result in other remaining times and hence other remaining time information 11.

It is furthermore possible to add a percentage information indicating a percentage of remaining journey time that is influenced by deactivating the function 10. For example, the remaining time information 11 may correspond to 20% of all the time that is approximately needed to reach the predefined range and/or destination of the vehicle 1. It may be possible to add a safe button which allows storage of a created list 19 of functions 10 to be deactivated. This list 19 preferably comprises the selected deactivation options 18, 18' but still allows manual activation with the activation button 20 of the respective deactivation option 17.

In summary, the invention shows a power saving sequence based on user feedback. Full control is given to the user. However, it comprises suggestions about how the power saving sequence should be. The priority levels selected by the user is not feasible and is rejected by the power sequence mode. The assumption is that the information about power usage predicted for each function 10 is known. The application manager will know if the power needs can be satisfied. If not based on the functions 10 marked as low priority functions 10 are turned off automatically once the threshold of users is used up. If turning off a high power capacity function 10 can accommodate a low capacity function 10, the user can go ahead and add it. In this part, the idea is to be dynamic and accepting or rejecting the suggestions (deactivation options 17) and the priority of functions 10. The list 19 may alternatively be referred to as power saving sequence list. However, this list 19 may also comprise functions 10 which are disabled for the user to be deactivated which are here the safety related functions 10 which are part of the group 16. When the user decides to move a function 10 from the left side to the right side on the display device 7, the function manager 5 predicts the power usage of the selected function 10 with the help of information from the battery management system 3. If the battery capacity reaches a point where there is no capacity even to accommodate safety related features, the vehicle 1 goes into a complete dead state. The user will be given options to choose any function 10 other than the function 10 which is disabled by default which are the safety relevant functions 10. The user can add as many functions 10 in the sequence till the capacity of the battery 2 is maintained. In the same way as adding features the user also has an option to remove the function 10 from the list 19 if it is no longer needed from his side, so that the capacity of the other prioritized functions 10 can be extended.

## Claims

1. Method for selecting at least one function (10) of a vehicle (1) to be deactivated for saving energy provided by a battery (2) of the vehicle (1), wherein the method comprises:
- identifying (S1) all functions (10) of the vehicle (1) that are currently active in the vehicle (1) and at least partially powered by the battery;
- for each identified function (10), determining (S2) a remaining time information (11) describing a time interval starting at a current moment, wherein for this time interval the function (10) continues to be operable in such a way that a predefined range and/or destination of the vehicle (1) is reachable despite this continued operation of the function (10) as well as the continued operation of the other identified functions (10), wherein the remaining time information (11) is determined by applying a time information determination algorithm (12) on vehicle data (13) describing an energy consumption (14) of the identified functions (10) and/or a movement (15) of the vehicle (1);
- for each identified function (10), verifying (S3) if the function (10) is part of a group (16) of predefined functions (10) that are required to remain activated for the vehicle (1) to continue its operation; and
- for each identified function (10) which is not part of the group (16), providing (S5) a deactivation option (17), wherein the provided deactivation option (17) indicates the remaining time information (11) determined for the function (10) and by activating the provided deactivation option (17) the function (10) is deactivated (S8).

2. Method according to claim 1, wherein each identified function (10) which is not part of the group (16) is automatically deactivated when the time interval expires regardless of whether the deactivation option (17) for this function (10) has been activated or not.

3. Method according to any one of the preceding claims, wherein the provided deactivation option (17) is outputted by an output device (7) in the vehicle (1), which is in particular a display device and/or a loudspeaker.

4. Method according to claim 3, wherein all the provided deactivation options (17) are output in an order dependent on the determined time information (11).

5. Method according to claim 3 or 4, wherein at least one of the output deactivation options (17) is manually selectable (S6) by a selection device (8) and add to a list (19) of selected deactivation options (18, 18'), wherein the list (19) is configured to comprise several selected deactivation options (18, 18') and at least one of the selected deactivation option (18, 18') is removable from the list (19), wherein each selected deactivation option (18, 18') on the list (19) is manually activatable.

6. Method according to any one of the preceding claims, wherein at least one of the provided deactivation options (17) is activated automatically (S7) under consideration of at least one setting (22) in a user profile of a current user of the vehicle (1) and/or at least one stored experience information (23) describing a previous behavior of the current user when manually activating at least one of the provided deactivation options (17).

7. Method according to any one of the preceding claims, wherein the group (16) of predefined functions (10) that are required to remain activated for the vehicle (1) to continue its operation comprises safety relevant functions (10) of the vehicle (1).

8. Method according to any one of the preceding claims, wherein the group (16) of predefined functions (10) that are required to remain activated for the vehicle (1) to continue its operation does not comprise comfort functions (10), vehicle performance functions (10) and/or advanced driver assistance systems.

9. Method according to any one of the preceding claims, wherein a battery management system (3) of the battery (2) provides the vehicle data (13) describing the energy consumption (14) of the identified functions (10).

10. Vehicle (1) configured to perform a method according to any one of the preceding claims.
